# EUROPEAN PATENT APPLICATION

(11) **EP 3 193 262 A1**
(43) Date of publication of application: **19.07.2017**
(21) Application number: 14889120.3
(22) Date of filing: 18.11.2014
(51) Int. Cl.: G06F 17/30, G06F 21/60, H04L 29/06, H04W 12/04, H04W 12/08

(54) **DATABASE OPERATION METHOD AND DEVICE**

(30) Priority: 09.09.2014 CN 201410455872
(71) Applicant: ZTE Corporation, Shenzhen, Guangdong 518057 (CN)
(72) Inventor: FAN, Wuxun, Shenzhen Guangdong 518057 (CN); ZHAO, Guotao, Shenzhen Guangdong 518057 (CN)
(74) Representative: Studio Torta S.p.A.
(86) International application number: PCT/CN2014/091442
(87) International publication number: WO 2015/154469

(57) **Abstract**

Disclosed are a database operation method and device. The method comprises: receiving a read/write request for an open source database of a first terminal; under the trigger of the read/write request, generating a first key for accessing the open source database; comparing the first key with a second key so as to determine whether the first key is consistent with the second key, wherein the second key is a key which is generated by the first terminal according to a feature code of the first terminal when the open source database is created; and according to a comparison result, determining whether it is permitted to conduct a read/write operation on the open source database, wherein if the comparison result indicates that the first key is consistent with the second key, it is permitted to conduct the read-write operation on the open source database, and if the comparison result indicates that the first key is inconsistent with the second key, it is prohibited to conduct the read/write operation on the open source database. By means of the present invention, the problem that the open source database has potential security risks is solved, so that user data written into the database can be protected on a system level, thereby avoiding the potential security risks and losses caused to a user by the illegal acquisition of these data.

## Description

### TECHNICAL FIELD

The present disclosure relates to the field of communication, and more particularly, to a method and device for operating a database.

### BACKGROUND

At present, the most widely used operating system in mobile phones is Android. In the Android system, most of the system and application data, such as system configuration data, contacts, Short Messaging Service SMS, and site login passwords and online shopping information stored by applications, are stored by using a SQLite database. The SQLite is a very small cross-platform embedded database, and the database thereof is stored in a local disk in the form of files. Because of its simple, efficient and cross-platform features, the SQLite is widely applied in the embedded systems. However, a free version of the open source of the SQLite is lack of an almost requisite feature in a database: database encryption. Thus, after obtaining documents in the SQLite database, the data contents stored in the database can be directly viewed by using any text editing tools or specialized software for viewing the SQLite database, which results in a huge security risk.

Unfortunately, the Android system adopts the open source free version of the SQLite. The Android system limits the access to the system and application database files. However, after acquiring the Root privilege to the Android system, everyone can export and view these database files without restriction. Some malware or virus programs can even directly read the contents of these database files directly on the mobile phone by special means. Once such data is taken by malicious people, it may bring potential security risks and economic losses to users. Therefore, it is necessary to design a method and technique for preventing the contents in the database from being easily read and identified, so as to stop leakage of such information.

In view of the related art, no effective solution is put forward for solving the security problem in the open source database.

### SUMMARY

The embodiments of the present disclosure provide a method and device for operating a database to solve at least the problem of security risk in an open source database in the related art.

According to an embodiment of the present disclosure, there is provided a method for operating a database, including: receiving a read/write request to an open source database of a first terminal; generating a first key for accessing the open source database under triggering of the read/write request; comparing and determining whether the first key is consistent with a second key, wherein the second key is a key generated by the first terminal based on a feature code of the first terminal when creating the open source database; and determining whether to allow a read/write operation to the open source database according to a comparison result, wherein the read/write operation to the open source database is permitted when the comparison result indicates that the first and second keys are consistent; and the read/write operation to the open source database is prohibited when the comparison result indicates that the first and second keys are inconsistent.

Alternatively, the generating the first key for accessing the open source database includes: when the read/write request is a read/write request sent by the first terminal, generating the first key based on the feature code of the first terminal.

Alternatively, when the read/write request is the read/write request sent by the first terminal, the comparison result indicates that the first and second keys are consistent.

Alternatively, the generating the first key for accessing the open source database includes: when the read/write request is a read/write request sent by a second terminal, generating the first key based on a feature code of the second terminal.

Alternatively, when the read/write request is the read/write request sent by the second terminal, the comparison result indicates that the first and second keys are inconsistent.

Alternatively, the determining whether to allow the read/write operation to the open source database based on the comparison result includes: determining whether to allow the read/write operation to the open source database itself and/or whether to allow the read/write operation to contents in the open source database based on the comparison result.

Alternatively, the feature code includes at least one of: a terminal identification, a Bluetooth communication address, and a Wireless Fidelity (referred to as WiFi) address.

According to another embodiment of the present disclosure, there is provided a device for operating a database, including: a receiving module arranged to receive a read/write request to an open source database of a first terminal; a generation module arranged to generate a first key for accessing the open source database under triggering of the read/write request; a comparison module arranged to compare and determine whether the first key is consistent with a second key, wherein the second key is a key generated by the first terminal based on a feature code of the first terminal when creating the open source database; and a determination module arranged to determine whether to allow a read/write operation to the open source database according to a comparison result, wherein the read/write operation to the open source database is permitted when the comparison result indicates that the first and second keys are consistent; and the read/write operation to the open source database is prohibited when the comparison result indicates that the first and second keys are inconsistent.

Alternatively, the generation module is further arranged to, when the read/write request is a read/write request sent by the first terminal, generate the first key based on the feature code of the first terminal.

Alternatively, the comparison module is further arranged to, when the read/write request is the read/write request sent by the first terminal, indicate that the first and second keys are consistent. Alternatively, the generation module is further arranged to, when the read/write request is a read/write request sent by a second terminal, generate the first key based on a feature code of the second terminal.

Alternatively, the comparison module is further arranged to, when the read/write request is the read/write request sent by the second terminal, indicate that the first and second keys are inconsistent.

Alternatively, the determination module is further arranged to determine whether to allow the read/write operation to the open source database itself and/or whether to allow the read/write operation to contents in the open source database based on the comparison result.

Alternatively, the feature code includes at least one of: a terminal identification, a Bluetooth communication address, and a WiFi address.

According to the present disclosure, a read/write request to the open source database of the first terminal is received; a first key for accessing the open source database is generated under the triggering of the read/write request; the first key is compared with a second key to determine whether they are consistent, wherein the second key is a key generated by the first terminal based on the feature code of the first terminal when creating the open source database; and it is determined whether to allow a read/write operation to the open source database according to the comparison result, wherein when the comparison result indicates consistence, it is allowed to perform read/write operation on the open source database; and when the comparison result indicates inconsistence, it is prohibited to perform the read/write operation on the open source database, which solve the problem of security risks existing in the open source database, and thereby protection can be provided to the user data written into the database at the system level, so as to avoid the potential security problems and losses to the user due to the illegal access to the data.

### BRIEF DESCRIPTION OF THE DRAWINGS

The drawings described herein provide a further understanding of the disclosure, and constitute a part of this application. The illustrative embodiments of the present disclosure and its description are intended to explain the present disclosure and are not construed as limiting the present disclosure. In the drawings:
Fig. 1 is a flow chart of a method for operating a database according to an embodiment of the present disclosure;
Fig. 2 is a structural block diagram of a device for operating a database according to an embodiment of the present disclosure;
Fig. 3 is a logic flow chart of a method for operating a database according to an embodiment of the present disclosure;
Fig. 4 is a flow chart of an operational business process of a database according to an embodiment of the present disclosure;
Fig. 5 is a service flow chart of generation of a database key according to an embodiment of the present disclosure; and
Fig. 6 is a block diagram of a device according to an embodiment of the present disclosure.

### DETAILED DESCRIPTION

Hereinafter, the present disclosure will be described in detail with reference to the accompanying drawings. It is to be noted that without conflict, the embodiments and features in the embodiments of the present application may be combined with each other.

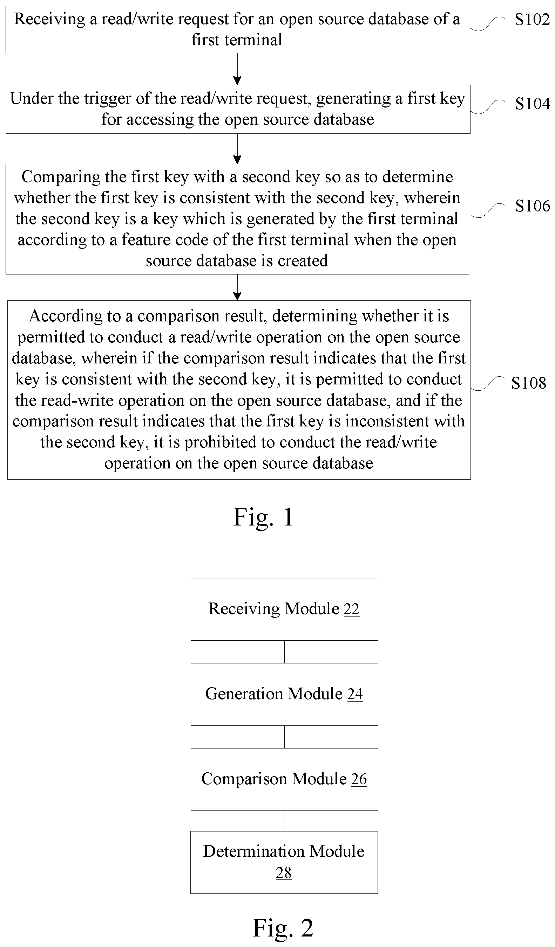

The present embodiment provides a method for operating a database. Fig. 1 is a flow chart of a method for operating a database according to an embodiment of the present disclosure. As shown in Fig. 1, the flow includes the following steps.

In step S102, a read/write (read and/or write) request to an open source database of a first terminal is received.

In step S104, under triggering of the read/write request, a first key for accessing the open source database is generated.

In step S106, the first key is compared with a second key to determine whether they are consistent, herein the second key is a key generated by the first terminal based on a feature code of the first terminal when creating the open source database.

In step S108, it is determined whether or not a read/write operation is allowed to be performed on the open source database based on a comparison result, herein the read/write operation is permitted for the open source database when the comparison result indicates consistence, and the read/write operation is prohibited when the comparison result indicates inconsistence.

By the above steps, the first key provided when requesting to read/write the open source database of the first terminal is compared with the second key generated by the first terminal when creating its open source database, and when the first key and the second key are consistent, it is allowed to perform the read/write operation on the open source database. Compared with the related art in which there is no encryption of the database or only an access right is provided for the database, the above steps protect the user data written into the database at a system level, which avoids the potential security and losses brought to the users due to the illegal access to the data.

The above-described step S104 relates to generating the first key for accessing the open source database. In an alternative embodiment, the first key may be generated based on the feature code of the first terminal when the read/write request is transmitted by the first terminal to which the open source database belongs. In this case, i.e., when the read/write request is a read/write request sent by the first terminal, the comparison result indicates that the first key coincides with the second key, and at this time, it is allowed to perform the read/write operation on the open source database.

In another alternative embodiment, the generation of the first key for accessing the open source database may be performed by the following step: when the read/write request is a read/write request sent by the second terminal, generating a first key based on a feature code of a second terminal. In this case, the comparison result indicates that the first key does not coincide with the second key, and at this time, it is not allowed to perform the read/write operation on the open source database.

It should be noted that the read/write operation to the open source database may include a number of manners. Hereinafter, examples will be described. In an alternative embodiment, it is determined whether or not the read/write operation is allowed to be performed on the open source database itself based on the comparison result. In another alternative embodiment, it is determined whether or not contents of the open source database are allowed to be read and written based on the comparison result. By setting keys in different parts of the database, it is possible to set encryptions to various parts of the database more targetedly, so as to achieve a better security effect.

Alternatively, the feature code includes at least one of the following: a terminal identification, a Bluetooth communication address, and a WiFi address.

In the present embodiment, there is also provided a device for operating a database for realizing the above-described embodiments and alternative embodiments. The contents having been described would not be elaborated. As used herein, the term "module" may implement a combination of software and/or hardware of predetermined functions. Although the devices described in the following embodiments are alternatively implemented in software, the implementation of hardware, or a combination of software and hardware, is also possible and envisioned.

Fig. 2 is a block diagram of a structure of a device for operating a database according to an embodiment of the present disclosure. As shown in Fig. 2, the device includes: a receiving module 22 arranged to receive a read/write request to an open source database in a first terminal; a generation module 24 arranged to generate a first key for accessing the open source database under triggering of the read/write request; a comparison module 26 arranged to compare the first key with a second key and determine whether the first key is consistent with the second key, herein the second key is a key generated by the first terminal based on a feature code of the terminal when creating the open source database; a determination module 28 arranged to determine whether to allow a read/write operation to the open source database according to a comparison result, herein the read/write operation to the open source database is permitted when the comparison result indicates that the first and second keys are consistent; and the read/write operation to the open source database is prohibited when the comparison result indicates that the first and second keys are inconsistent.

Alternatively, the generation module 24 is further arranged to generate the first key based on the feature code of the first terminal when the read/write request is a read/write request sent by the first terminal.

Alternatively, when the read/write request is a read/write request sent by the first terminal, the comparison module 26 is also arranged to indicate that the first key coincides with the second key.

Alternatively, the generating module 24 is further arranged to, when the read/write request is a read/write request sent by a second terminal, generate the first key based on a feature code of the second terminal.

Alternatively, when the read/write request is a read/write request sent by the second terminal, the comparison module 26 is further arranged to indicate that the first key does not coincide with the second key.

Alternatively, the determination module 28 is further arranged to determine whether to allow the read/write operation to the open source database itself and/or to allow the read/write operation to contents of the open source database based on the comparison results.

Alternatively, the feature code includes at least one of the following: a terminal identification, a Bluetooth communication address, and a WiFi address.

In view of the above-mentioned problems in the related art, hereinafter, taking the open source free version database of the SQLite in the Android system as an example, illustrations will be given in combination with alternative embodiments.

To prevent the information in the database from being illegally obtained, it is possible to encrypt the data written into the database at the application level so that the read data is unrecognizable to an illegal user; also, it is possible to apply means, such as encryption and data access restriction, on the database itself or its stored data at the system level to ensure the safety of the contents of the database.

The operation of encrypting the data written into the database at the application level is simple, but each time the read/write operation is performed on the database, the data needs to be decrypted/encrypted, which increases the burden of the application, and also, due to the openness of the Android system, it is very difficult to realize that all the applications perform encryption/decryption on the data written into the database at the operational level. The encryption to the database at the system level can be implemented at the bottom level of the system by the mobile phone manufacturers, which not only provides a better security than the application, but also can provide transparence to the application, and does not affect the compatibility of the application, so this is a good solution for solving the security risks in the SQLite database.

Hereinafter, taking the encryption to the database at the system level as an example, the alternative embodiment of the present disclosure will be described in detail with reference to the accompanying drawings.

The purpose of this alternative embodiment is to provide a database security protection mechanism under the Android system. At the same time, it describes the method and technology for achieving the database security protection under the Android system through the encryption mechanism of the SQLite database. The data written into the database can be protected at the system level, so as to avoid the data from bringing security risks and losses to the user due to the illegal access to the data.

The alternative embodiment discloses a database security protection mechanism under the Android system, the mechanism including the following contents: encrypting unencrypted SQLite data used in the Android system to prevent contents of the database from being illegally read, herein, the encryption to the database includes, but is not limited to, the encryption by using the security mechanism of the database itself, and the encryption to the database file itself; improving an interface relevant to read/write of the database packaged in a framework level in the Android system, on the premise of ensuring consistence with the original data read/write interface, providing a read/write method to the encrypted database, reading/writing the data content from the encrypted database and providing it to an upper application of the Android; because the modified data read/write interface and the native data read/write interface of the Android are consistent, the encryption of the Android database is transparent to the application, the changes to the underlying do not affect the original functionality of the application, and no changes are required for the application.

The present alternative embodiment discloses a method and technique for realizing database security protection under the Android system through the encryption mechanism of the SQLite database. The method and technique include the following basic modules: a security module of the SQLite database, the module realizing an encryption/decryption interface reserved by the SQLite database, related encryption/decryption functions, page coding functions and the like, for building a SQLite database with an encryption function; a read/write interface of the encrypted database packaged in the Android framework level, where the data read/write interface is obtained mainly by packing and extending the native database operation interface in the Android framework, and related operations of providing a key of the encrypted database and opening the encrypted database are implemented in the extended interface; and an Android database key generation module, because the database encryption is transparent to the upper application, a key of the database is automatically generated by reading information, such as a serial number of the current mobile phone, via the Android system through a certain algorithm, and all the databases in the mobile phone use the same key. However, each mobile phone has a unique key, and the database in the mobile phone cannot be used when departing from the current operating environment of the mobile phone. The database security protection mechanism under the Android system in the alternative embodiment may be applied to devices, such as a mobile phone or a tablet using the Android system.

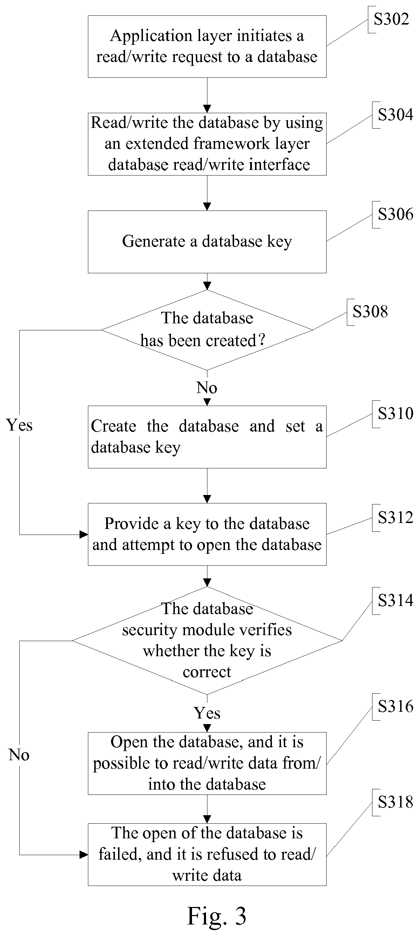

Fig. 3 is a logic flow chart of a method for operating a database according to an embodiment of the present disclosure. As shown in Fig. 3, the method and mechanism for quickly enabling a privacy protection mode by a specific action includes the following steps.

In step S302, an application layer initiates a read/write request to the database.

The application layer is relative to a framework layer of the Android system, and includes application programs under the Android system and operations to the database by function modules in the Android system, such as databases of individual Providers supporting running of the Android system.

In step S304, an extended framework layer database read/write interface is used to read/write the database.

The extended framework layer database read/write interface is obtained by adding jump codes into the native database read/write interface of the Android, and switching the flow of calling the read/write process to extended code. The application layer does not care whether the underlying database is encrypted, and the interfaces called by the application layer are all the native database read/write interfaces of the Android.

In step S306, a database key is generated.

The feature code that can uniquely identify the mobile phone is read, and a specified encryption algorithm is used to generate the database key for creating and opening the database.

The unique feature code for identifying the mobile phone includes, but is not limited to, a serial number, a Bluetooth, a WiFi address, and etc. of the mobile phone, as long as they can persistently and uniquely identify the current mobile phone.

The encryption algorithm may be any kind of encryption algorithm which can protect the key, where the encryption algorithm is one of the characteristics for ensuring the database security.

In order to facilitate the use and improve the operation efficiency of the database, the key can be generated and saved when the mobile phone starts, and every time the database is read, the key is directly acquired and used. However, the security of the generated key should be ensured so as to prevent illegal code acquisition.

In step S308, it is checked whether the database has been created, when it is checked that the database has been created, step S312 is performed; and when it is checked that the database is not created, step S310 is performed.

Actually, the creation of the database in the Android system is performed by a specific operation before the data is read/written, where the step of checking whether the database has been created is for the convenience of depiction, and the purpose thereof is to more clearly describing the idea of the present disclosure.

In step S310, a database is created and a security key of the database is set.

In step S312, a key is set to the database for attempting to open the database.

In step S314, it is determined whether or not the database security module verifies that the set key is correct. When the key is correct, step S316 is executed; and when the key is incorrect, step S318 is performed.

The database security module is responsible for security verification (key verification) of the database, and encryption/decryption of the database itself or the contents of the database.

The database security module may be a separate functional module between the outside of the database and the Android database operation framework, or may be a functional module embedded into the inside of the database by applying the characteristic of the database per se, or may be an existing interactive module of database internal security in combination with the above two characteristics, as long as they can meet the security requirements of ensuring the contents of the database data.

It is verified whether the key is correct, and the database security module determines whether the database is allowed to be opened to read/write data based on the verification of whether the key is correct or not.

In step S316, the database is normally opened, and it is possible to read/write data from/into the database.

When reading/writing data from/into the database, if a target to be encrypted by the database security module is the database itself, the database security module needs to decrypt the database file itself, and is responsible for writing/reading data requested by the application layer. And if the target to be encrypted by the database security module is data contents in the database, the database security module needs to encrypt the written data requested by the application layer and store it into the database. And for the data requested to be read by the application layer, the database security module needs to decrypt it into a plaintext after reading it from the database, and then provide it to the application layer.

For both the encryption to the database file itself and the encryption to the data content stored in the database, it is necessary to effectively prevent the contents of the database from being illegally read and recognized.

In step S318, the open of the database is failed, and it is refused to read/write data.

The condition of the refusal to read/write data when opening the database is failed, may be processed by returning the wrong read/write to the application layer through the Android framework layer.

It should be clarified that when the Android system performs reading/writing on the database, it is unnecessary to open the database every time, instead, the database is opened before reading/writing data, and then the database is closed after completing the reading/writing. The above steps and procedures are only intended to illustrate the idea of the present disclosure and should not be treated as a read/write process of database under the Android system. The procedures and steps of encrypting the database by using the normal database operation flow of the Android system are also within the protection scope of the present disclosure.

The SQLite database encryption is implemented by a manner of database encryption interfaces reserved by the SQLite database, and the encryption interfaces reserved by 3.7 version of the SQLite are as follows:
(1): sqlite3_key(): specifying a key used by the database.
(2): sqlite3_rekey(): re-setting a key for the database so as to re-set the key for the database.
(3): sqlite3CodecGetKey(): returning a current key of the database.
(4): sqlite3CodecAttach(): associating the key and a page coding function with the database.

The above encryption interface only provides the characteristic of database encryption/decryption, it is also necessary to separately provide auxiliary interfaces for encrypting/decrypting the database data, coding the database pages and the like, and by associating sqlite3CodecAttach with the SQLite database, the encryption function to the database is achieved.

For the encryption/decryption interface of the database data, any kind of encryption/decryption algorithm which can guarantee the security of data may be used. However, an operation efficiency of the encryption/decryption algorithm needs to be noticed. The overly complex encryption/decryption algorithm can provide a better data security performance, but it will drag the running speed of the database and the mobile phone and affect the user experience.

In addition, in another alternative embodiment, all the databases use a uniform key and the key is unique in the same mobile phone, it is no need to re-set the key of the database, thereby it is unnecessary to implement the sqlite3_rekey interface.

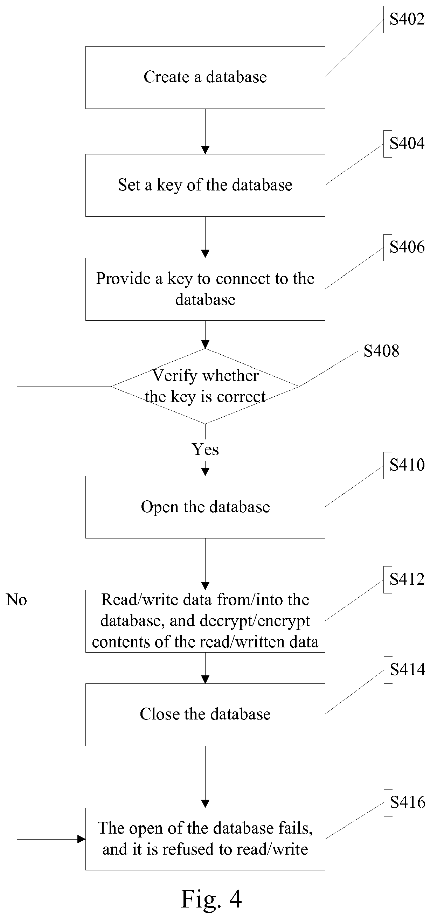

Fig. 4 is a flow chart of an operational process of a database according to an embodiment of the present disclosure. As shown in Fig. 4, the process includes the following steps.

In step S402, a database is created.

The operation of creating the database is initiated by an application layer.

In step S404, a key of the database is set.

The key of the database is set by the extension of read/write interface of the Android database framework, and the set key is generated by step S306 shown in the flow of Fig. 3 without interference by the application layer.

In step S406, a key is provided to connect to the database.

Providing the key to connect to the database is performed by the extension of the read/write interface of the Android database framework, and the set key is generated by step S306 shown in the flow of Fig. 3 without interference by the application layer.

In step S408, it is verified whether the key is correct, if the key is correct, step S416 is executed; and if the key is not correct, S416 is executed.

The verification of whether the key is correct is performed by the encryption extended interface of the SQLitem database, and it is determined whether the database may be opened according to the verification result in order to read/write data.

In step S410, the database is opened normally.

Opening the database is similar to operating the database by the Android native interface, a database connection is returned to the application layer, and before closing the database connection, the application layer may not need to re-verify the key, and may directly use the connection to read/write data from/into the database.

In step S412, the data is read/written from/into the database, and contents of the read/written data are decrypted/encrypted.

The decryption/encryption to the read/written data content is performed by the encryption extended interface of the SQLite database inside the SQLite database, and the data read/written by the read/write interface of the Android database framework is plaintext data.

In step S414, when the data reading/writing is complete, the database is closed.

The closure of the database is initiated by the application layer. After the database is closed, the database connection opened at step S410 is also closed, and when needing to write data into the database again later, step S410 may be executed again to obtain the database connection.

In step S416, when the open of the database fails, it is refused to read/write.

When it is failed to open the database, the failure is returned to the application layer through the read/write interface of the Android database framework to inform the operation result.

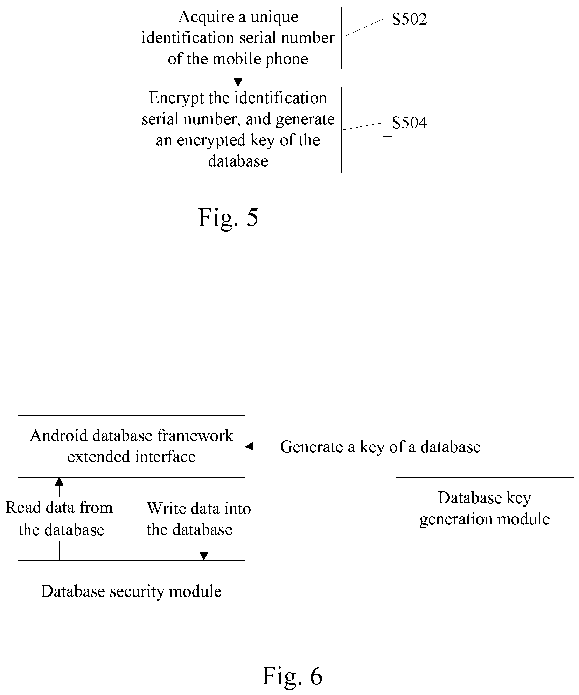

Fig. 5 is a service flow chart of generating a key of the database according to an embodiment of the present disclosure. As shown in Fig. 5, the procedure includes the following steps.

In step S502, a unique identification serial number of the mobile phone is acquired.

The unique identification serial number of the mobile phone is the fixed content stored in the mobile phone, such as a serial number of the mobile phone itself, and a WiFi/Bluetooth address, rather than potential change contents, such as a number of the mobile phone and an IP address, so as to generate a unique and fixed key of the database in the specific mobile phone.

The unique identification serial number of the mobile phone may be the serial number of the mobile phone itself, the WiFi/Bluetooth address, or the like, or may also be a combination of such contents. Taking into account that the serial number is used as an encryption plaintext of the key of the database, the serial number should have a certain complexity to ensure that the key of the database may not be easily cracked.

In step S504, the identification serial number is encrypted to generate an encrypted key of the database.

Any encryption algorithm may be chose to encrypt the serial number to generate the key.

Because the encrypted key does not need to be restored, the encryption algorithm having high encryption strength and being different from the encryption/decryption to the data contents in the database may be considered, and the encryption algorithm is achieved by using the local code such as C/C++, so as to enhance the security of the database key.

Fig. 6 is a block diagram of a device according to an embodiment of the present disclosure. As shown in Fig. 6, the device includes the following basic modules: an Android database framework extension interface arranged to match the native database operation interface of Android with the encrypted database, provide a transparent encryption database operation interface to the upper application layer, and provide the database key and related operations for operating the encrypted database to the lower encrypted database; a database key generation module arranged to generate an encrypted key of the database suitable for the current mobile phone according to the unique identification serial number of the current mobile phone; and a database security module arranged to realize the function of encrypting the database, including connection of the key to the database, and the encryption and decryption of the database file or the contents of the database, so as to ensure that the contents of the database are not illegally read and recognized.

According to the module constituting diagram of the device, the device may be widely used in terminal devices using the Android system and having the requirement of database security protection, such as a mobile phone.

In view of the above, through the embodiments of the present disclosure, under the premise of transparency to the upper applications, the methods and mechanisms for achieving the database security protection by using the SQLite database encryption mechanism may provide a system-level database security protection mechanism to guarantee security of the data contents stored in the database, and avoid the leakage of the data to bring security risks and economic losses to the user.

It will be apparent to those skilled in the art that the above-described modules or steps of the present disclosure may be implemented by a general purpose computing device which may be focused on a single computing device or distributed over a network of multiple computing devices. Optionally, they may be implemented by program codes executable by the computing device so that they may be stored in a storage device by a computing device and, in some cases, the shown or described steps may be performed in a different order, or may be achieved by separately making them into individual integrated circuit modules, or by making multiple modules or steps therein into a single integrated circuit module. Thus, the present disclosure is not limited to any particular combination of hardware and software.

The foregoing is merely illustrative of the alternative embodiments of the present disclosure and is not intended to limit of the present disclosure, and various changes and modifications may be made by those skilled in the art. Any modifications, equivalent substitutions, improvements, and the like within the spirit and principles of the disclosure are intended to be included within the scope of the present disclosure.

### Industrial Applicability

In the above technical solutions provided by the embodiments of the present disclosure, a read/write request to the open source database of the first terminal is received; a first key for accessing the open source database is generated under the triggering of the read/write request; the first key is compared with a second key to determine whether they are consistent, herein the second key is a key generated by the first terminal based on the feature code of the first terminal when creating the open source database; and it is determined whether to allow a read/write operation to the open source database according to the comparison result, herein when the comparison result indicates consistence, it is allowed to perform read/write operation on the open source database; and when the comparison result indicates inconsistence, it is prohibited to perform the read/write operation on the open source database. In this way, the present disclosure solves the problem of security risks existing in the open source database, and thereby protection can be provided to the user data written into the database at the system level, so as to avoid the potential security problems and losses to the user due to the illegal access to the data.

## Claims

1. A method for operating a database, comprising:
receiving a read/write request to an open source database of a first terminal;
generating a first key for accessing the open source database under triggering of the read/write request;
comparing and determining whether the first key is consistent with a second key, wherein the second key is a key generated by the first terminal based on a feature code of the first terminal when creating the open source database; and
determining whether to allow a read/write operation to the open source database according to a comparison result, wherein the read/write operation to the open source database is permitted when the comparison result indicates that the first and second keys are consistent; and the read/write operation to the open source database is prohibited when the comparison result indicates that the first and second keys are inconsistent.

2. The method of claim 1, wherein the generating the first key for accessing the open source database comprises:
when the read/write request is a read/write request sent by the first terminal, generating the first key based on the feature code of the first terminal.

3. The method of claim 2, wherein when the read/write request is the read/write request sent by the first terminal, the comparison result indicates that the first and second keys are consistent.

4. The method of claim 1, wherein the generating the first key for accessing the open source database comprises:
when the read/write request is a read/write request sent by a second terminal, generating the first key based on a feature code of the second terminal.

5. The method of claim 4, wherein when the read/write request is the read/write request sent by the second terminal, the comparison result indicates that the first and second keys are inconsistent.

6. The method of claim 1, wherein the determining whether to allow the read/write operation to the open source database based on the comparison result comprises:
determining whether to allow the read/write operation to the open source database itself and/or whether to allow the read/write operation to contents in the open source database based on the comparison result.

7. The method of any one of claims 1 to 6, wherein the feature code comprises at least one of:
a terminal identification, a Bluetooth communication address, and a Wireless Fidelity WiFi address.

8. A device for operating a database, comprising:
a receiving module arranged to receive a read/write request to an open source database of a first terminal;
a generation module arranged to generate a first key for accessing the open source database under triggering of the read/write request;
a comparison module arranged to compare and determine whether the first key is consistent with a second key, wherein the second key is a key generated by the first terminal based on a feature code of the first terminal when creating the open source database; and
a determination module arranged to determine whether to allow a read/write operation to the open source database according to a comparison result, wherein the read/write operation to the open source database is permitted when the comparison result indicates that the first and second keys are consistent; and the read/write operation to the open source database is prohibited when the comparison result indicates that the first and second keys are inconsistent.

9. The device of claim 8, wherein the generation module is further arranged to, when the read/write request is a read/write request sent by the first terminal, generate the first key based on the feature code of the first terminal.

10. The device of claim 9, wherein the comparison module is further arranged to, when the read/write request is the read/write request sent by the first terminal, indicate that the first and second keys are consistent.

11. The device of claim 8, wherein the generation module is further arranged to, when the read/write request is a read/write request sent by a second terminal, generate the first key based on a feature code of the second terminal.

12. The device of claim 11, wherein the comparison module is further arranged to, when the read/write request is the read/write request sent by the second terminal, indicate that the first and second keys are inconsistent.

13. The device of claim 8, wherein the determination module is further arranged to determine whether to allow the read/write operation to the open source database itself and/or whether to allow the read/write operation to contents in the open source database based on the comparison result.

14. The device of any one of claims 8 to 13, wherein the feature code comprises at least one of:
a terminal identification, a Bluetooth communication address, and a Wireless Fidelity WiFi address.
